(19) Europäisches Patentamt
European Patent Office
Office européen des brevets

(11) Veröffentlichungsnummer: **0 651 526 A2**

# (12) EUROPÄISCHE PATENTANMELDUNG

(21) Anmeldenummer: **94115312.4**

(51) Int. Cl.⁶: **H04J 1/05**, H03H 17/00

(22) Anmeldetag: **29.09.94**

(30) Priorität: **30.10.93 DE 4337134**

(43) Veröffentlichungstag der Anmeldung: **03.05.95 Patentblatt 95/18**

(84) Benannte Vertragsstaaten: **AT CH DE ES FR GB IT LI NL**

(71) Anmelder: **ANT Nachrichtentechnik GmbH**
**Gerberstrasse 33**
**D-71522 Backnang (DE)**

(72) Erfinder: **Göckler, Heinz, Dr.**
**Elbinger Strasse 52**
**D-71522 Backnang (DE)**

## (54) Verfahren zur Aufbereitung eines digitalen Frequenzmultiplexsignals.

(57) Verfahren zur Aufbereitung eines digitalen Frequenzmultiplexsignals aus mit einer Abtastfrequenz $f_A$ abgetasteten Kanalsignalen, mit Filterung, Frequenzumsetzung, Interpolation und digitaler Addition, dadurch gekennzeichnet, daß vor der Frequenzumsetzung eine komplexe Filterung mit Abtastratenverminderung von $f_A$ auf $f'_A$ erfolgt,
daß danach eine erste Frequenzverschiebung mittels eines ersten komplexen Mischers so erfolgt, daß die Nutzbandmittenfrequenz fm des digitalen Kanalsignals in den Bereich $-f'_A/4 \leqq fm \leqq + f'_A/4$ fällt,
daß danach eine erste Nachfilterung erfolgt und daß vor oder nach der individuellen Frequenzumsetzung des Kanalsignals eine zweite Nachfilterung mit Abtastratenerhöhung auf die ursprüngliche Abtastrate fA erfolgt (Fig. 2 und 4).

Einsatz in Rundfunk und Fernsehverteilsystemen. Verminderter Schaltungsaufwand und VLSI-Realisierungsmöglichkeit (hierbei auch bessere Separierung in Teilfunktionseinheiten).

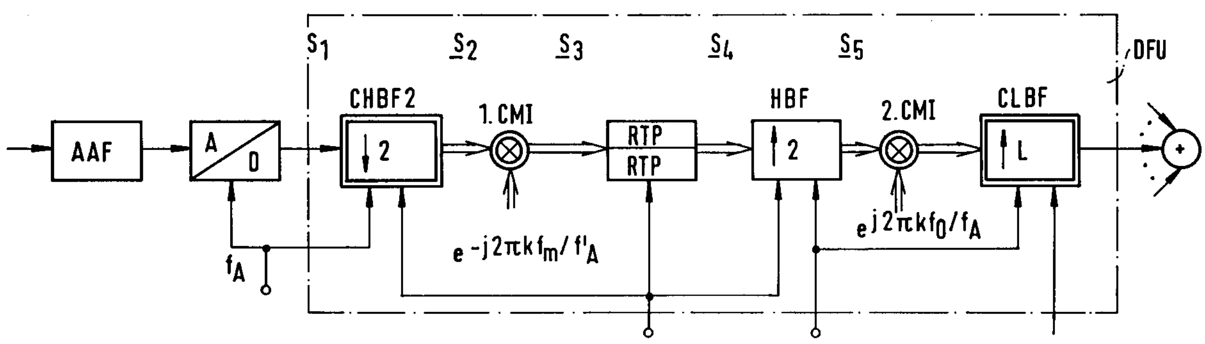


Fig. 2 Digitaler Frequenzumsetzer (DFU)

EP 0 651 526 A2

Die Erfindung bezieht sich auf ein Verfahren zur Aufbereitung eines digitalen Frequenzmultiplexsignals aus Kanalsignalen gemäß Oberbegriff des Anspruches 1.

Solche Verfahren sind bekannt, beispielsweise durch die deutsche Offenlegungsschrift 40 26 477 oder die deutschen Offenlegungsschrift 40 41 632.

Bei diesen digitalen Freguenzumsetzverfahren, wie sie z.B. für die CATV-Verteil-und Zubringersysteme eingesetzt werden, die mit verhältnismäßig hohen Abtastraten z.B. 28 MHz arbeiten, wird der Aufwand des analogen Vorfilters (Anti-Aliasing-Filter zur Einhaltung der Bedingungen des Abtasttheorems) dadurch vermindert, daß zwischen dem AD-Umsetzer und dem eigentlichen digitalen Frequenzumsetzer ein zusätzliches Digitalfilter (RBF) eingesetzt wird, siehe Figur 1, welche den Stand der Technik darstellt. Die Vorteile sind dabei geringerer analoger Aufwand, geringere Toleranzprobleme, geringere Alterungsprobleme, geringer Temperaturdrift, geringerer Aufwand für Abgleich und höhere Langzeitstabilität. Allerdings ist für diese Filterung ein sehr aufwendiges Digitalfilter nötig, da die Filterflanke sehr steil sein muß, damit sich die Nachbarkanäle nicht gegenseitig stören.

Der vorliegenden Erfindung lag deshalb die Aufgabe zugrunde, ein Verfahren der eingangs genannten Art anzugeben, das bei gleicher Qualität der Signalverarbeitung einen geringeren Schaltungsaufwand erfordert.

Diese Aufgabe wurde gelöst mit den Mitteln des Patentanspruches 1. Vorteilhafte Ausgestaltungen ergeben sich durch die Unteransprüche.

Die Vorteile des erfindungsgemäßen Verfahrens sind die, daß bei gleicher Signalqualität ein geringerer Schaltungsaufwand benötigt wird.

Es folgt nun die Beschreibung der Erfindung anhand der Figuren. Die Figuren 2 und 4 zeigen zwei Ausführungsbeispiele für die digitale Frequenzumsetzung eines Kanals (es ist jeweils ein Kanalzweig gezeichnet als Blockschaltbild). Die Figuren 3a bis 3e zeigt die spektrale Darstellung von Signalen und Filterübertragungscharistika.

Die Figuren 2 und 4 zeigen jeweils einen Pfad zur digitalen Frequenzumsetzung eines Kanals, wobei das eingangsseitige Analogsignal einem Antialiasing-Filter AAF zugeführt wird, welches das Bandpaßsignal mit der Nutzbandbreite B so zu begrenzen hat, daß sich durch die Abtastung mit der Abtastrate $f_A > 2B$ keine spektralen Überlappungen oder Überfaltungen mit dem Nutzspektrum oder dessen Spiegelfrequenzen ergeben (es handelt sich hier um eine Überabtastung). Nach der Analog-Digital-Umsetzung A/D ist das Signal mit $f_A$ überabgetastet, um dann anschließend in einem komplexen Halbbandfilter CHBF2 gefiltert und dezimiert zu werden durch Abtastung mit $f_{A'} = f_A/2$. Die Figur 3a zeigt die Filterübertragungsfunktionen sowie das Nutzspektrum |S1|. Die aritmetische Mittenfrequenz fm' des Spektrums des eingangsseitigen Analogsignals muß für die Bandpaß-Abtastung folgende Bedingung erfüllen:

$$\left.\begin{array}{l} (m-1)\ f_A < f'_m \pm B/2 < (2m-1)\ f_A/2 \\ \text{bzw.} \\ (2m-1)\ f_A/2 < f'_m \pm B/2 < mf_A \end{array}\right\}\ \text{Gleichung (1a)}$$

mit m = 1, 2, 3,.... und der Nutzsignalbandbreite

$B < f_A/2$ Gleichung (1b)

Für den Fall, daß in Übereinstimmung mit Gleichung (1)

$f'_m \approx (2m-1)\ f_A/4$,

mit m = 1, 2, 3, ... (vorteilhafte Frequenzlage) gilt, wird das Nutzspektrum des Signals durch die Abtastung mit

$f_A = 1/T$ zu der Mittenfrequenz
$f_m \approx f_A/4$ Gleichung (2a)

für m ungerade in Gleichung (1a) bzw.

$f_m \approx 3\ f_A/4$ Gleichung (2b)

gleichbedeutend mit fm ≈ - $f_A/4$ für m gerade in Gleichung (1a) geschoben.
Diese Frequenzlage ($f_m \approx f_A/4$)nach der Abtastung ist in Fig. 3a dargestellt ($|S_1|$).

Falls fm' = (2m-1) $f_A/4$, wenn also das Gleichheitszeichen bei Gleichung (1a) gilt, so weisen die Übergangsbereiche für die Filterung jeweils die gleiche Breite auf, wodurch der Aufwand für das analoge Vorfilter AAF sowie für das erste Digitalfilter CHBF2 minimal wird. Falls B = $f_A/4$ (entsprechend einem Überabtastfaktor von 2), weisen auch die Übergangsbereiche der Filter die Breite B auf. CHBF2 ist ein die Abtastfrequenz halbierendes komplexes Halbbandfilter gemäß deutscher Patentschrift DE 36 21 737. Das Ergebnis der CHBF2-Filterung ist der Figur 3b zu entnehmen: Spektrum $|\underline{S}_2|$. Durch die Halbierung der Abtastfrequenz werden nur die durch den Sperrbereich stark abgeschwächten Spektralanteile auf das Nutzspektrum, hier beispielhaft um $f_A/4 = f'_A/2$ gefaltet. Die in den Übergangsbereichen von AAF und CHBF2 nur unzureichend gedämpften Spektralanteile werden mit sich selbst überfaltet und stören daher nicht. Im nächsten Verarbeitungsschritt wird das Signalspektrum $\underline{S}_2$ (entspr. dem komplexwertigen Signal $\underline{S}_2$ (kT') mit T' = $1/f'_A$) um -fm zur Frequenz f = 0 geschoben, wodurch die beiden nachfolgenden Filter RTP und HBF mit reellen Koeffizienten realisierbar sind. In diesem Fall besteht jeder dieser Blöcke aus zwei völlig entkoppelten identischen Filtern, wovon das eine mit dem Realteil und das andere mit dem Imaginärteil des zu verarbeitenden komplexen Signals beaufschlagt wird. Im Falle der Figur 2 wird dem ersten komplexen Mischer 1. CMI das komplexe Trägersignal mit der Frequenz fm zugeführt, um die Mitte des Signalspektrums $\underline{S}_2$ auf die Frequenz 0 zu bringen, siehe dazu das Diagramm der Figur 3c ($\underline{S}_3$), die auch die Filterkurve des nachfolgenden Filters RTP enthält. Es kann aber auch eine Mischfrequenz fc = fm ± $f'_A/4$ zugeführt werden, so daß eine Frequenzverschiebung nach ± $f'_A/4$ bzw. ± 3 $f'_A/4$ vollzogen wird. Eine solche Frequenzverschiebung bringt etwa den gleichen schaltungstechnischen Aufwand für die nachfolgende Filterung, wobei in diesem Fall das frequenzverschobene komplexe Signal einem komplexen Bandfilter CBF mit komplexen Koeffizienten zugeführt wird. Auch die zweite Nachfilterung wird dann ein komplexes Halbbandfilter CHBF mit reellen und imaginären Koeffizienten gemäß deutscher Patentschrift DE 37 05 206.

Die Filterung des frequenzverschobenen Nutzspektrums $\underline{S}_3$ mit einem Paar identischer Tiefpässe RTP mit reellen Koeffizienten ist ein Standardproblem und kann rekursiv oder nichtrekursiv realisiert werden. Wird RTP als FIR-Filter mit linearer Phase realisiert und gelten zudem die folgenden Bedingungen

$f_d^R + f_s^R = f'_A/2$ Gleichung (3a)

und

${}_dR = {}_sR$ Gleichung (3b)

so ist das reelle Tiefpaßfilter RTP sehr aufwandsgünstig als reelles Halbbandfilter RHBF zu realisieren. Die in Gleichung (2) angegebenen Größen haben die folgende Bedeutung: $f_d^R = B/2$ ist die Durchlaßgrenzfrequenz, $f_s^R$ die Sperrgrenzfrequenz, $\delta_d^R$ die absolute Rippelabweichung vom Wunschwert 1 im Durchlaßbereich und $\delta_s^R$ die absolute Rippelabweichung vom Wunschwert 0 im Sperrbereich, siehe auch Figur 3c. Das Ergebnis der RTP-Filterung mit steilen Filterflanken ist, daß zwischen den Nutzspektralanteilen die unerwünschten Überfaltungsanteile eliminiert sind. In diese Frequenzlücken können dann im Zusammengang mit der Frequenzmultiplexbildung Nachbarkanäle eingefügt werden. Für die nachfolgende HBF-Filterung können die Bedingungen nach Gleichung (3) in der Regel ebenfalls geltend gemacht werden, bei Erfüllung derselben kann eine Realisierung als reelles Halbbandfilter RHBF in sehr aufwandsgünstiger Weise ermöglicht werden, siehe auch Codiere/Rabiner "Multirate digital signal Processing", Englewood cliffs, N.Y., Prentice Hall, 1983. Die Figur 3d zeigt das Filterverhalten von HBF sowie das Nutzspektrum, dessen erste spektrale Wiederholung bei $f'_A$ durch HBF weggefiltert wird. Nach der damit verbundenen Abtastratenverdoppelung werden nun mehrere Nachbarkanalplätze frei, wie aus der Figur 3e ersichtlich ist. Die restlichen Verarbeitungsschritte der Frequenzumsetzung sind die gleichen wie beim Stande der Technik, wobei der zweite komplexe Mischer 2. CMI das Spektrum $\underline{S}_5$ (siehe Figur 3e) in die Wunschfrequenzlage schiebt, wobei f0 entsprechend der Mittenfrequenz des Nutzspektrums festzulegen ist. Nach der interpolierenden Filterung mit CLBF, einem komplexen Bandfilter, wird das Ausgangssignal dieses Pfades mittels Summiergliedern mit den Ausgangssignalen der anderen Pfade vereinigt und bildet somit das Frequenzmultiplexsignal.

Zu ergänzen ist noch, daß die Nachfilterung vor dem zweiten Mischer im Falle der Zentrierung der Nutzspektrumsmitte auf ± $f'_A/4$ ebenfalls als komplexes Halbbandfilter CHBF realisiert werden kann, dieses komplexe Halbbandfilter ist beispielsweise der deutschen Patentschrift DE 37 05 209 zu entnehmen.

Es erfolgt nun ein Aufwandsvergleich zwischen dem Stande der Technik nach Figur 1 und der beispielhaften erfindungsgemäßen Lösung nach Figur 2. Der Aufwandsvergleich erfolgt aufgrund der zu ermittelnden Multiplikationsraten.

Zunächst Figur 1 : Das Filter RBF, ein allgemeines FIR Bandpaßfilter, arbeitet bei der Abtastrate $f_A$ mit $N_{RBF}$-Koeffizienten und weist dementsprechend eine Multiplikationsrate von $M_{RBF} = N_{RBF} \cdot f_A$ auf.

CHBF arbeitet bei der selben Abtastrate und mit der Koeffizientenlänge $N_{CHBF}$' dazu sind $(N_{CHBF} + 3)/2$ Multiplikationen auszuführen (einige Koeffizienten dieses komplexen Halbbandfilters sind identisch gleich 0). Die Multiplikationsrate ist dann $M_{CHBF} = (N_{CHBF} + 3) \cdot f_A/2$. Die Gesamtsumme der Multiplikationsrate ist dann

$$M_1 = [N_{RBF} + (N_{CHBF} + 3)/2] \cdot f_A.$$

Für einen digitalen Frequenzumsetzer für die Umsetzung von Fernsehsignalen ergibt sich dann für das sehr flankensteile Eingangsfilter RBF ein Filtergrad von N = 127 und für das Filter CHBF einen solchen von 27 (Filtergrad N ist proportional dem Verhältnis aus Abtastrate $f_A$ durch die Übergangsflankenbreite $\Delta f$). Daraus errechnet sich die Multiplikationsrate zu $M_1^{TV} = 142\ f_A$ nach dem Stand der Multiplikationsrate zu $M_1^{TV} = 142\ f_A$ nach dem Stand der Technik.

Für das Ausführungsbeispiel der Figur 2 werden folgende Multiplikationsraten ermittelt. Das Filter CHBF2 hat die gleiche Filterlänge wie das Filter CHBF von Figur 1, arbeitet aber bei der halben Abtastrate $f_A/2$. Seine Multiplikationsrate ist deshalb $M_{CHBF2} = (N_{CHBF} + 3) \cdot f_A/4$.

Der erste komplexe Mischer macht vier Multiplikationen bei der halben Abtastrate erforderlich, seine Multiplikationsrate ist dann $M_{CMI} = 2\ f_A$.

RTP arbeitet bei der halben Abtastrate und ist realisiert durch zwei identische allgemeine FIR-Tiefpässe gleicher absoluter Bandbreite der Übergangsbänder, die aber relativ zur Filterabtastfrequenz die doppelte Breite aufweisen. Deshalb ist der Filtergrad $N_{RTP} = N_{RBF}/2$ und damit die Multiplikationsrate des Filterpaars RTP

$$M_{RTP} = 2 \cdot 1/2\ N_{RBF} \cdot f_A/2 = N_{RBF} \cdot f_A/2.$$

Das Halbbandfilter HBF ist für den Fall fm = ± $f_A/4$ bezüglich Aufwand genau idenisch transponiert zu CHBF2; für den Fall fm = ± $f_A/4$ ist HBF aber aufwandsgünstiger als CHBF2. Es sei hier die worst case Länge angenommen, d.h. der gleiche Filtergrad wie bei CHBF2; dann gilt für den Fall zweier reeller Halbbandfilter HBF, die bei der Abtastrate $f_A/2$ arbeiten die folgende Multiplikationsrate

$$M_{HBF} = 2 \cdot (N_{CHBF} + 3) \cdot f_A/4.$$

Für die gesamte Multiplikationsrate ergibt sich dann

$$M_2 = [N_{RBF}/2 + 2 + 3\ (N_{CHBF} + 3)/4] \cdot f_A.$$

Für einen praktischen TV-Frequenzumsetzer ergibt sich dann unter den gleichen Voraussetzungen wie bei der Aufwandsberechnung nach Figur 1 eine Multiplikationsrate $M_2^{TV} = (64 + 2 + 3/2 \cdot (27 + 3)/2) \cdot f_A = 89\ f_A$.

Die Figur 4 zeigt eine erfindungsgemäße Alternativlösung, wobei im Vergleich zu Figur 2 die Reihenfolge der Schritte HBF-Filterung und zweite komplexe Mischung 2. CMI vertauscht ist. Dadurch wird zwar der Aufwand dieser Filterung verdoppelt, aber sowohl Filterung als auch zweite komplexe Mischung arbeiten bei der halben Abtastrate $f_A/2$. Gemäß Figur 4 wird jedoch die Filterung HBF und CLBF gemäß Figur 2 zusammengefaßt zu einem einzigen komplexen interpolierenden Bandfilter C2LBF, welches die Abtastfrequenz $f'_A$ in einer Stufe um den Faktor 2L erhöht. Diese Vorgehensweise erbringt weiterhin einen kleinen Vorteil an Multiplikationsratenaufwand gegenüber dem der Figur 2.

**Patentansprüche**

1. Verfahren zur Aufbereitung eines digitalen Frequenzmultiplexsignals aus Kanalsignalen unter Anwendung folgender Schritte:
   - die reellwertigen Kanalsignale der Mittenfrequenz f'm werden jeweils einzeln mit einer Abtastfrequenz $f_A$ abgetastet und falls erforderlich digitalisiert, wobei

$$\left.\begin{array}{l} (m-1)\, f_A < f'_m \pm B/2 < (2m-1)\, f_A/2 \\ \text{bzw.} \\ (2m-1)\, f_A/2 < f'_m \pm B/2 < m f_A \end{array}\right\} \text{Gleichung (1a)}$$

mit m = 1, 2, 3,.... und der Nutzsignalbandbreite

$B < f_A/2$ Gleichung (1b)

gilt,

- die digitalisierten Kanalsignale werden nachgefiltert mit gleichartig aufgebauten Digitalfiltern mit komplexen Koeffizienten zur Erzeugung komplexwertiger Ausgangssignale,
- die so behandelten Kanalsignale werden gegeneinander derart frequenzverschoben, daß sich die Spektren benachbarter Kanalsignale nicht überlappen,
- die komplexwertigen frequenzverschobenen Kanalsignale werden jeweils mittels komplexer Filter einer Abtastratenwandlung durch Interpolation um den Faktor L unterzogen,
- die so umgesetzten abtastratengewandelten Kanalsignale werden durch digitale Addition zu einem Frequenzmultiplexsignal zusammengefügt, dadurch gekennzeichnet,

daß vor der Frequenzumsetzung eine komplexe Filterung mit Abtastratenverminderung um den Faktor L1 (CHBF2) erfolgt, daß danach eine erste Frequenzverschiebung mittels eines ersten komplexen Mischers (1. CMI) so erfolgt, daß die Nutzbandmittenfrequenz fm des digitalisierten Kanalsignals in den Bereich $-f_A'/4 \leqq f_m \leqq + f'A/4$ fällt, wobei $f'_A = f_A/L_1$, daß danach eine erste Nachfilterung erfolgt (RTP) und daß vor oder nach der individuellen Frequenzumsetzung des digitalisierten Kanalsignals eine zweite Nachfilterung mit Abtastratenerhöhung um den Faktor L1 auf die ursprüngliche Abtastrate fA erfolgt (Fig. 2 und 4).

**2.** Verfahren nach Anspruch 1, dadurch gekennzeichnet, daß die erste Frequenzverschiebung durch Mischen mit einem komplexen Trägersignal der Frequenz fm erfolgt.

**3.** Verfahren nach Anspruch 2, dadurch gekennzeichnet, daß die erste Nachfilterung mittels zweier reeller Tiefpässe (RTP) erfolgt.

**4.** Verfahren nach Anspruch 2 oder 3, dadurch gekennzeichnet, daß die zweite Nachfilterung mittels zweier reeller Halbbandfilter (HBF) erfolgt.

**5.** Verfahren nach Anspruch 1, dadurch gekennzeichnet, daß die erste Frequenzverschiebung durch Mischen mit einem komplexen Trägersignal der Frequenz fm ± fA/4 erfolgt.

**6.** Verfahren nach Anspruch 5, dadurch gekennzeichnet, daß die erste Nachfilterung mittels eines komplexen Bandfilters (CBF) erfolgt.

**7.** Verfahren nach Anspruch 5 oder 6, dadurch gekennzeichnet, daß die zweite Nachfilterung mittels eines komplexen Halbbandfilters (CHBF) erfolgt.

**8.** Verfahren nach einem der vorhergehenden Ansprüche, wobei die Abtastratenerhöhung um L1 nach der individuellen Frequenzumsetzung erfolgt, dadurch gekennzeichnet, daß die Funktionen der zweiten Nachfilterung und die komplexwertige Filterung mit der Abtastratenwandlung durch Interpolation um den Faktor L zu einem komplexen Filter zusammengefaßt werden (C2LBF) (Fig. 4).

**9.** Verfahren nach einem der vorhergehenden Ansprüche, dadurch gekennzeichnet, daß der Faktor L1 der Abtastratenverminderung bzw. -Erhöhung die folgenden Werte annimmt:
L1 ≧ 2 und ein Element der natürlichen Zahlen ist.

**10.** Verfahren nach einem der vorhergehenden Ansprüche, dadurch gekennzeichnet, daß die Abtastrate $f_A \geqq 4B$.

**11.** Verfahren zur Zerlegung eines digitalen Frequenzmultiplexsignals, das aufbereitet ist nach dem Verfahren nach einem der Ansprüche 1 bis 10, dadurch gekennzeichnet, daß die zur Aufbereitung des digitalen Frequenzmultiplexsignals aus Kanalsignalen angewendeten Schritte einer Hermite'schen Transposition unterzogen werden.

**12.** Anwendung des Verfahrens nach einem der vorhergehenden Ansprüche für die Signalübertragung mittels Lichtwellenleiter in einem Kabelfernsehzubringer- und/oder Verteilnetz für Rundfunk und Fernsehen.

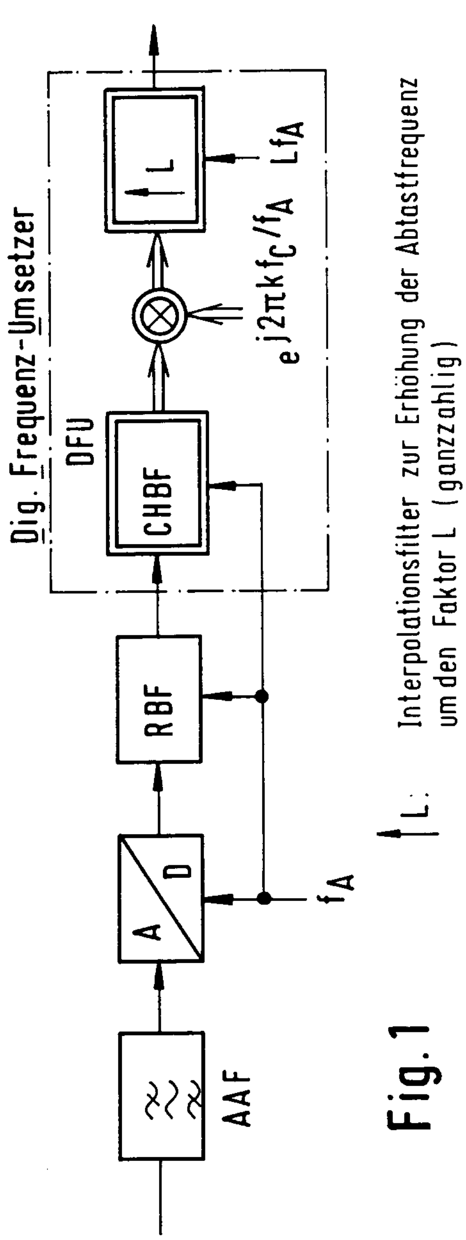


Fig. 1

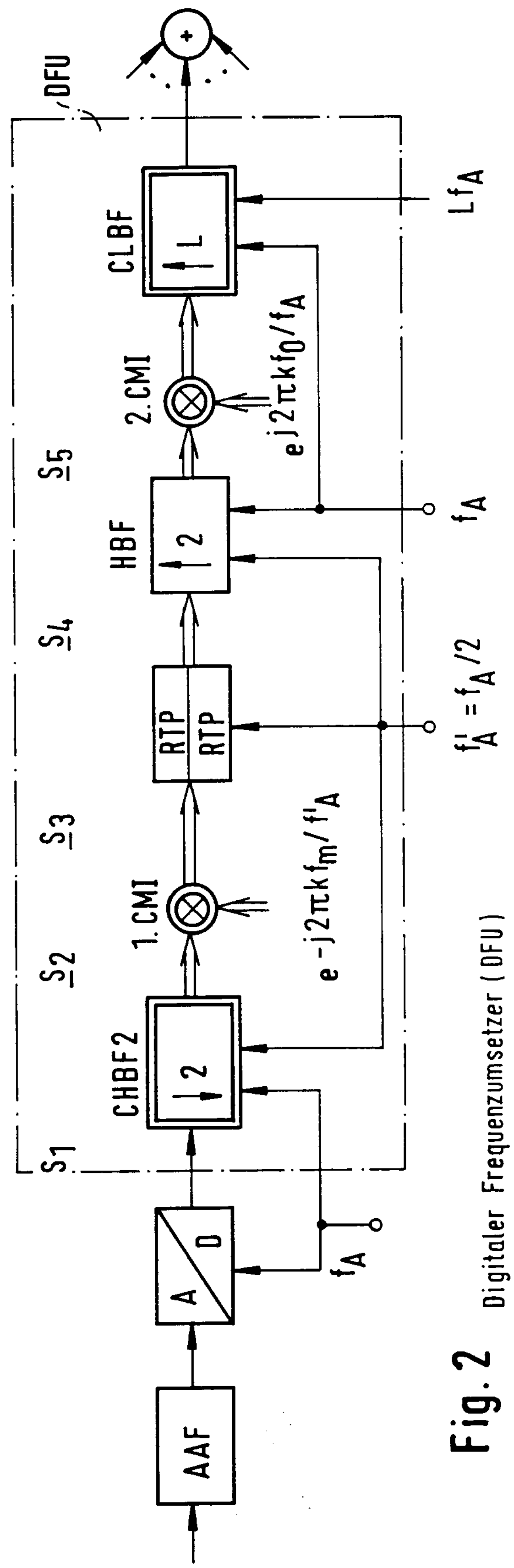


Digitaler Frequenzumsetzer (DFU)

Fig. 2

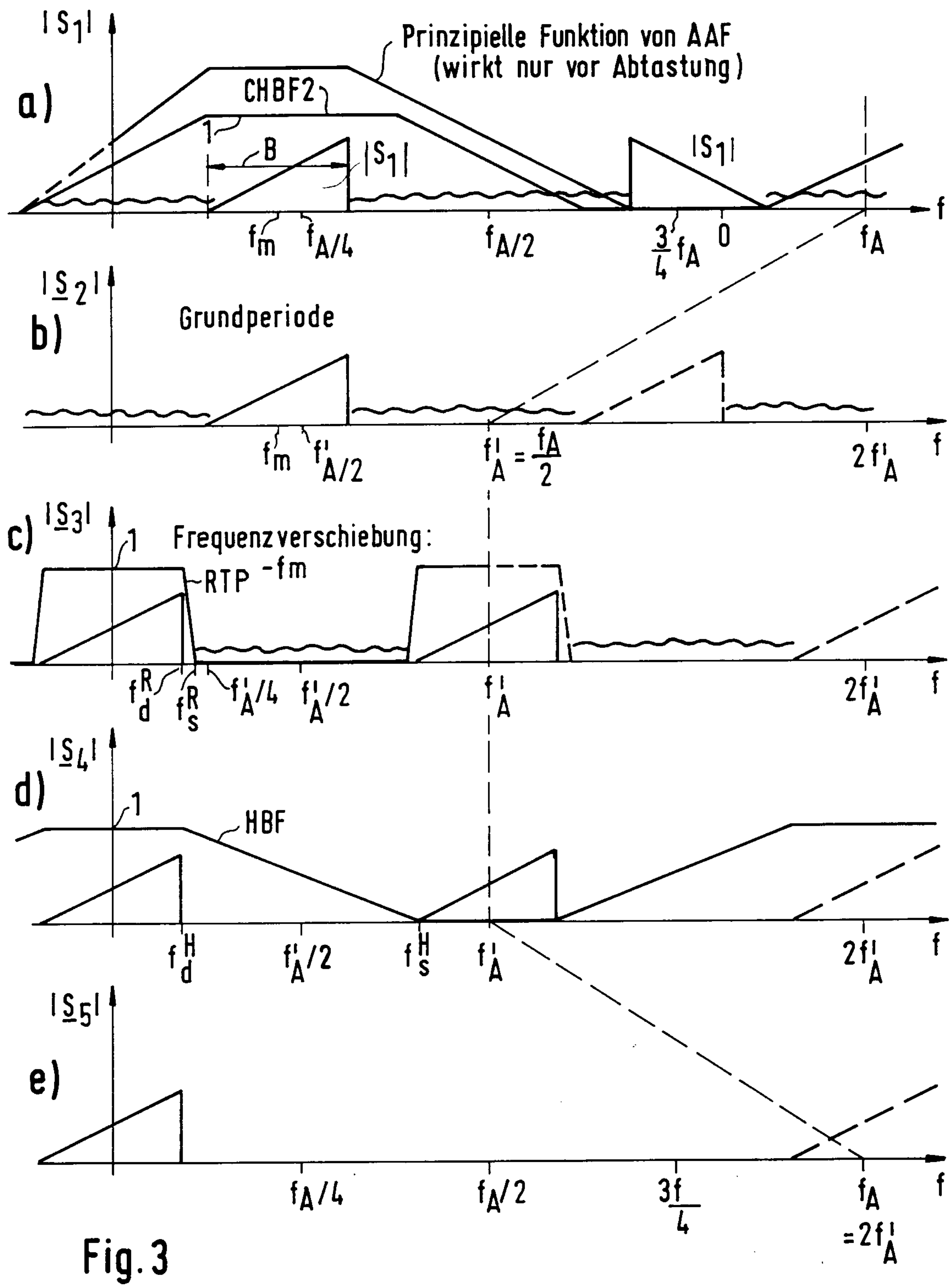

|S1|
a)
Prinzipielle Funktion von AAF
(wirkt nur vor Abtastung)
CHBF2
1
B
|S1|
|S1|
f
fm
fA/4
fA/2
3/4 fA
0
fA
|S2|
b)
Grundperiode
fm
f'A/2
f'A = fA/2
2f'A
f
|S3|
c)
1
Frequenzverschiebung:
RTP
-fm
fRd
fRs
f'A/4
f'A/2
f'A
2f'A
f
|S4|
d)
1
HBF
fHd
f'A/2
fHs
f'A
2f'A
f
|S5|
e)
fA/4
fA/2
3f/4
fA
=2f'A
f


Fig. 3

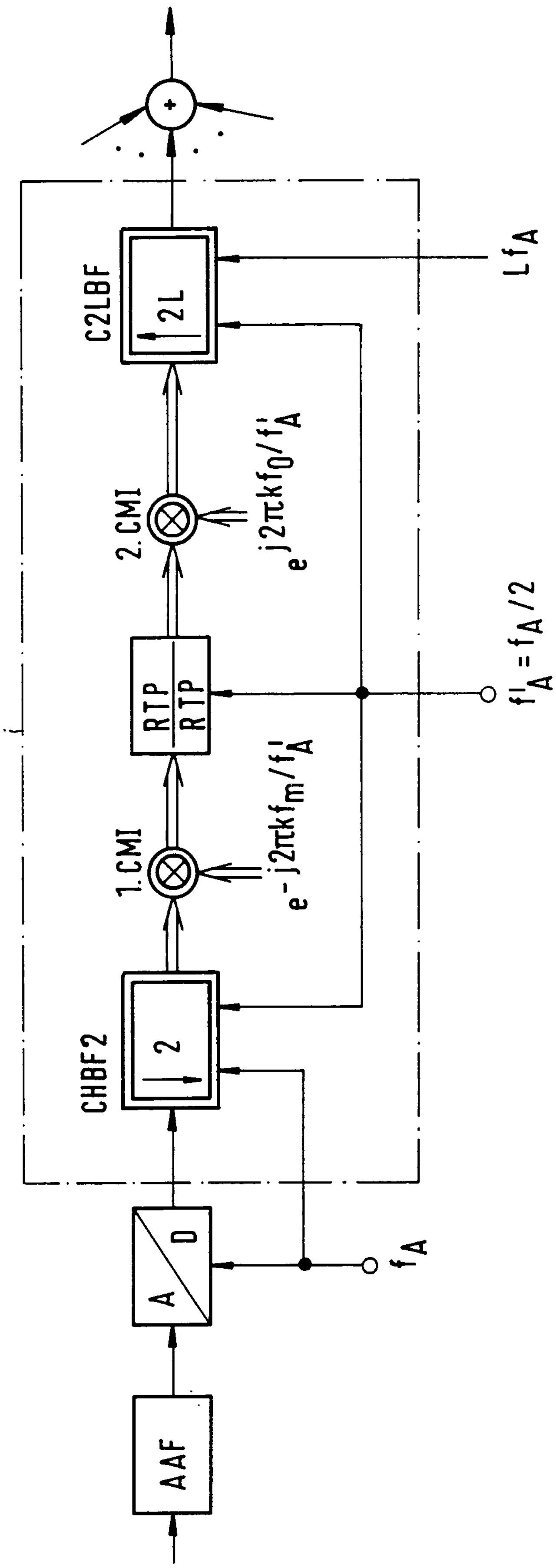
AAF
A
D
$f_A$
DFU
CHBF2
2
1.CMI
$e^{-j2\pi k f_m/f'_A}$
RTP
RTP
$f'_A = f_A/2$
2.CMI
$e^{j2\pi k f_0/f'_A}$
C2LBF
2L
$L f_A$
+

Fig. 4